# EUROPEAN PATENT SPECIFICATION

(11) **EP 1 732 182 B1**
(45) Date of publication and mention of the grant of the patent: **26.12.2007**
(21) Application number: 06010973.3
(22) Date of filing: 29.05.2006
(51) Int. Cl.: H01R 13/66

(54) **Connecting structure of rotary connector and steering angle sensor**
Verbindungsanordnung eines Drehverbinders und Steuerwinkelsensor
Dispositif de connexion d' un connecteur rotatif et capteur d' angles

(30) Priority: 06.06.2005 JP 2005165654
(43) Date of publication of application: 13.12.2006
(73) Proprietor: ALPS ELECTRIC CO., LTD., Tokyo 145-8501 (JP)
(72) Inventor: Araki, Junji, Ota-ku Tokyo 145-8501 (JP)
(74) Representative: Klunker . Schmitt-Nilson . Hirsch

(56) References cited:
- DE-A1- 19 755 094
- PATENT ABSTRACTS OF JAPAN vol. 1997, no. 02, 28 February 1997 (1997-02-28) & JP 08 255643 A (FURUKAWA), 1 October 1996 (1996-10-01)

## Description

### BACKGROUND OF THE INVENTION

### 1. Field of the Invention

The present invention relates to a connecting structure of a rotary connector built in a steering apparatus of a vehicle, used as an electrical connecting means for an air bag system or the like, and a steering angle sensor serving as detecting means for detecting information about the rotation of a steering wheel.

### 2. Description of the Related Art

A rotary connector generally includes a stator member, a rotor member rotatably connected to the stator member, a flexible cable held and wound in an annular space defined between the stator member and the rotor member, and as the rotor member is rotated in accordance with the steering wheel, the flexible cable is wound or unwound in the annular space. Here, a relatively large clearance (in an in-plane direction orthogonal to a rotation axis) is formed between the rotor member and the stator member of the rotary connector; accordingly, the rotor member can be stably rotated in accordance with the steering wheel. In the meantime, a steering angle sensor includes a fixing member, a rotor member having a code plate that is rotatably connected to the fixing member, a photo-interrupter accommodated in the fixing member. As the rotor member and the code plate are rotated in accordance with the steering wheel, the photo-interrupter outputs detection signals of the amount of rotation. Here, when the rotor member of the steering angle sensor is supported, a small clearance with respect to the fixing member should be provided; accordingly, this prevents a backlash from occurring in the rotation direction and the axis line direction of the code plate integrated with the rotor member.

Conventionally, a technique has been disclosed in which a steering angle sensor unit includes a rotary connector and a steering angle sensor, as the steering angle sensor unit is built in a steering apparatus, the rotary connector is used as the electrical connecting means for an air bag system mounted in the steering wheel, and the steering angle sensor is used as the detecting means for detecting information about the rotation of the steering wheel (for example, see JP-A-11-135221 (pages 4 to 6, Fig. 8)).

According to the related art, protrusions are formed on one of a rotor member (first rotor member) of the rotary connector of a rotor member (second rotor member) of the steering angle sensor, and an elongated hole is formed on the other rotor member in a radial direction. In the case of making the rotary connector and the steering angle sensor into one unit, as the protrusion is engaged with the elongated hole in a state in which a coil spring is interposed between the first and second rotor members, the first and second rotor members are concentrically connected to each other, and a fixing member of the steering angle sensor is screwed to a stator member of the rotary connector. When the unit is built in the steering apparatus, after the first and second rotor members are inserted through a steering shaft, the steering wheel is connected to the first rotor member of the rotary connector located at an upper end thereof.

When an operator rotates the steering wheel, the first rotor member of the rotary connector and the second rotor member of the steering angle sensor integrally rotate; therefore, the flexible cable of the rotary connector is wound and unwound in an annular space, and the steering angle sensor detects the information about the rotation of the steering wheel. In this case, the first rotor member of the rotary connector requiring a relatively large clearance is connected to the second rotor member of the steering angle sensor requiring a minimum clearance, in a state in which the protrusion provided in one rotor member is engaged with the elongated hole formed in the other rotor member; accordingly, the first rotor member and the second rotor member can smoothly rotate. In addition, since the coil spring interposed between the first rotor member and the second rotor member urges the first rotor member and the second rotor member in such a direction that they separate from each other, it is possible to suppress a backlash in an axis line direction of the code plate integrated with the second rotor member of the steering angle sensor, and thus stable detection signals can be obtained from the steering angle sensor.

As describe above, in the connecting structure of the rotary connector and the steering angle sensor according to the related art, since the coil spring is interposed between the rotor member of the rotary connector and the rotor member of the steering angle sensor, the coil spring prevents a backlash from occurring in an axis line direction between both of the rotor members, and thus stable detection signals can be obtained. However, with the coil spring interposed between the rotor members, both of the rotor members should be connected to each other; consequently, operability in assembling deteriorates when the rotary connector and the steering angle sensor are formed as one unit, and noise such as a spring noise is generated due to vibration of the coil spring while driving the vehicle.

In addition, according to the related art, the rotor members of the steering angle sensor are formed of two separate members having a collar portion on both top and bottom ends thereof, a rotor member is formed by integrating both separate members with the code plate interposed therebetween, so that the rotor member is rotatably supported in each guide hole of an upper cover and a lower cover of the fixing member. Therefore, at least three members (code plate and the pair of separate members) are required to form an integrated product including the code plate and the rotor member, which leads to an increase in the number of parts of the steering angle sensor, thereby increasing cost.

### SUMMARY OF THE INVENTION

The present invention has been finalized in view of the drawbacks inherent in the related art, and it is an object of the present invention to provide a connecting structure of a rotary connector and a steering angle sensor capable of reducing noise.

In order to solve the above-described problems, according to a solving means, there is provided a connecting structure of a rotary connector and a steering angle sensor, including: a rotary connector in which a first rotor member is rotatably supported by a stator member, the first rotor member formed of a synthetic resin in a hollow shaft shape and rotating in accordance with a steering wheel; and a steering angle sensor in which a second rotor member is rotatably supported by a fixing member, the second rotor member in which a code plate is provided at an outer peripheral surface of a hollow shaft portion. A plurality of elastic pieces is provided in an inner peripheral portion of the first rotor member, the plurality of elastic pieces extending downward along an inner peripheral surface of the hollow shaft portion of the second rotor member, engaging portions are formed at the inner peripheral surface of the hollow shaft surface so as to be engaged with the elastic pieces. Here, as the stator member and the fixing member are fixedly connected to each other, the elastic piece is fixedly engaged with the engaging portions in a state in which the elastic pieces are bent.

According to the solving means, both rotor members are connected to each other due to the elastic piece provided in the first rotor member being engaged with the engaging portions in the second rotor member. However, when a gap between the first rotor member and the second rotor member slightly narrows as the stator member of the rotary connector is fixedly connected to the fixing member of the steering angle sensor during the assembling, each elastic piece of the first rotor member bends. Therefore, an elastic force is applied in such a direction that the first rotor member and the second rotor member separate from each other, and the central axis of the first rotor member is allowed to deviate from the central axis of the second rotor member. In addition, when the engagement of the engaging portions prevents a backlash from occurring in the rotation direction, the first and second rotor members can be positioned in the rotation direction. Therefore, stable detection signals can be obtained from the steering angle sensor by suppressing a backlash between both rotor members, and both rotor members can be smoothly rotated, respectively, as the rotary connector which requires a relatively large clearance is connected to a highly accurate steering angle sensor.

In the above-described structure, preferably, the plurality of elastic pieces of the first rotor member are disposed at equal intervals in a circumferential direction of the inner peripheral surface of the hollow shaft portion, and at least one of the elastic pieces is positioned in a rotation direction of the second rotor member. Therefore, not only is the urging force due to the bending of each elastic piece divided equally, but also a backlash is prevented in the rotation direction between the first and second rotor members, which improves the detection accuracy of the steering angle sensor.

In the above-described structure, preferably, a tongue portion is formed on the elastic piece of the first rotor member so as to extend downward at an inclined angle from an upper edge of the engaging hole, and an engaging protrusion is formed at the inner peripheral surface of the hollow shaft portion of the second rotor member so as to serve as the engaging portion to be inserted in the engaging hole, and the tongue portion is brought into elastic contact with the engaging protrusion by combining the engaging piece with the engaging protrusion in a snap-in relationship. Therefore, the tongue portion can be reliably pressure-contacted with the engaging protrusion by bending the elastic piece when the stator member of the rotary connector and the fixing member of the steering angle sensor are fixedly connected to each other. Further, a component force and a reactive force of resilience generated due to bending the elastic piece urge the first and second rotor members in an axis line direction and in a radial direction. Therefore, an elastic force is applied in such a direction that both rotor members separate from each other, and the central axis of the first rotor member is reliably allowed to deviate from the central axis of the second rotor member.

In addition, in the above-described structure, preferably, the second rotor member is formed of a synthetic resin molding product in which the code plate is integrally formed to the outer peripheral surface of the hollow shaft portion. Therefore, it is possible to reduce the number of parts and the man-hour for assembling.

### BRIEF DESCRIPTION OF THE DRAWINGS

Fig. 1 is a cross-sectional view illustrating a connecting unit of a rotary connector and a steering angle sensor according to an embodiment of the present invention;
Fig. 2 is an exploded perspective view of the connecting unit;
Fig. 3 is a plan view of a lower rotor provided in the connecting unit on the rotary connector side;
Fig. 4 is a cross-sectional view of the lower rotor; and
Fig. 5 is an explanatory view illustrating an essential portion of a connected part of the lower rotor and the steering angle sensor.

### DESCRIPTION OF THE PREFERRED EMBODIMENT

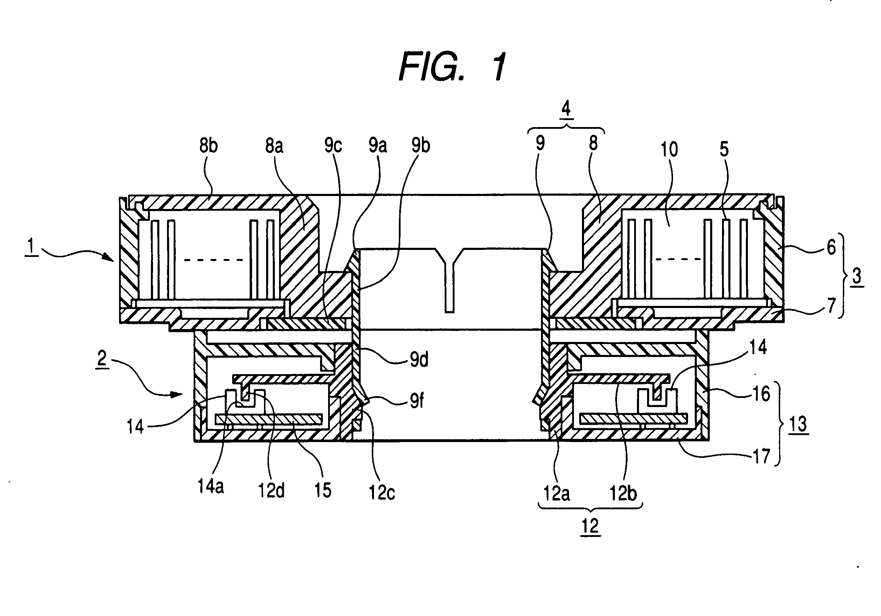

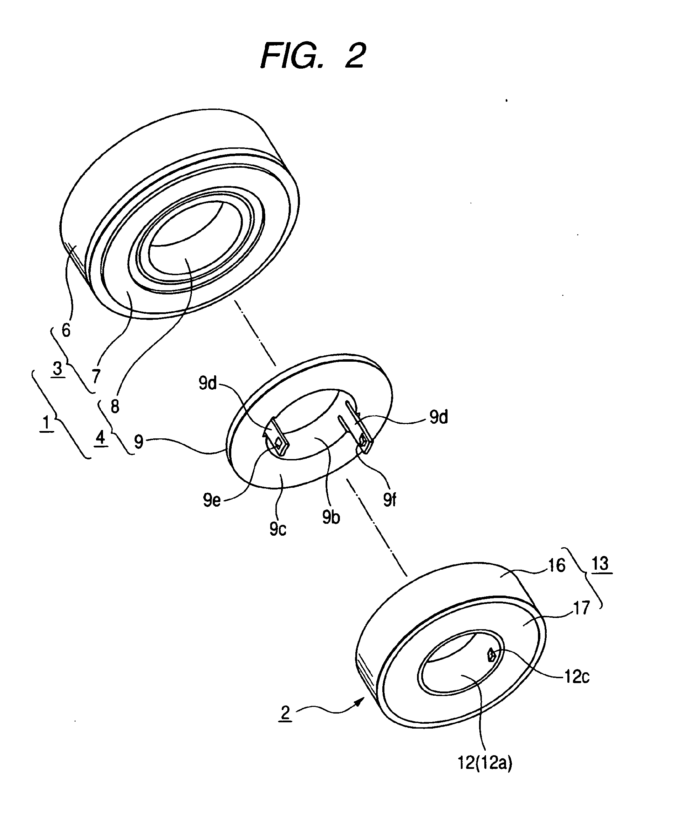

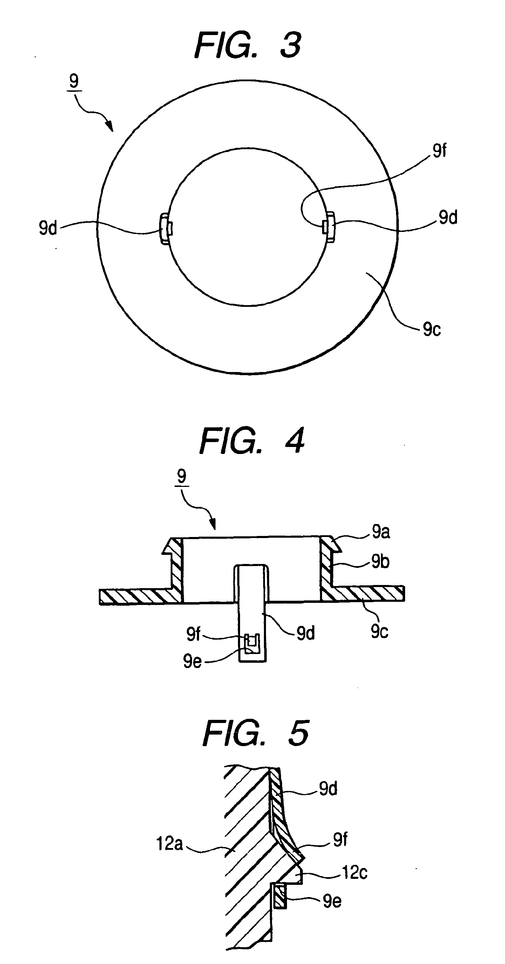

A preferred embodiment of the present invention will be described with reference to the accompanying drawings. Fig. 1 is a cross-sectional view illustrating a connecting unit of a rotary connector and a steering angle sensor according to the embodiment of the present invention. Fig. 2 is an exploded perspective view of the connecting unit. Fig. 3 is a plan view of a lower rotor provided in the connecting unit on the rotary connector side. Fig. 4 is a cross-sectional view of the lower rotor.

The connecting unit according to the embodiment is composed of a rotary connector 1 and a steering angle sensor 2. To be described below, the rotary connector 1 and the steering angle sensor 2 are built in a steering apparatus of a vehicle in an integrated state in which they are vertically laid on each other.

The rotary connector 1 is used as the electrical connecting means for an air bag system mounted on a steering wheel. The rotary connector 1 includes: a stator housing 3 serving as a stator member; a rotor housing 4 serving as a first rotor member having a hollow shaft structure; a flexible cable 5 which is wound and held in an annular space 10 defined between the stator housing 3 and the rotor housing 4. The stator housing 3 is composed of a cylindrical outer casing 6, a disk-shaped bottom plate 7 fixed to a lower end of the outer casing 6, and the outer casing 6 and the bottom plate 7 are formed by molding a synthetic resin. The rotor housing 4 is composed of an upper rotor 8 and a lower rotor 9, the upper rotor 8 is formed by extending a disk-shaped upper plate portion 8b in an outward direction from an upper end of a cylindrical inner portion 8a, and the lower rotor 9 is combined to the inner portion 8a of the upper rotor 8 in a snap-in relationship so as to rotate integrally with the upper rotor 8. The upper rotor 8 and the lower rotor 9 are also formed by molding a synthetic resin. In addition, the lower rotor 9 includes a hollow portion 9b which is provided with a snap click 9a on an upper end thereof, a disk-shaped lower plate portion 9c extending in the outward direction from the lower end of the hollow portion 9b, two elastic pieces 9d having an elongated shape extending downward from a position between both the upper and lower ends of the hollow portion 9b. The two elastic pieces 9d are formed at a 180-degree interval in a circumferential direction of the hollow portion 9b so as to face to each other. In addition, a front end (lower end) of each elastic piece 9d is provided with an engaging hole 9e and a tongue portion 9f that is inclined from an upper edge of the engaging hole 9e and extends downward.

The rotor housing 4 of the rotary connector 1 is configured by integrally forming the upper rotor 8 and the lower rotor 9, as the snap click 9a of the hollow portion 9b is combined with an inner peripheral wall of the inner portion 8a in a snap-in relationship. As shown in Fig. 1, the rotor housing 4 is rotatably supported by the stator housing 3, in a state in which an outer edge of the upper plate portion 8b slides on the upper end of the outer casing 6, and an outer edge of the lower plate portion 9c slides on the bottom surface of the bottom plate 7. The annular space 10 is formed by the outer casing 6 of the stator housing 3 and the upper rotor 8 of the rotor housing 4. The flexible cable 5 is wound, for example, in a spiral form (or in a spiral form whose winding direction is reversed) in the annular space 10. Both ends of the flexible cable 5 are led outside by a direct connector (not shown) or the like, after both ends thereof are fixed to the outer casing 6 and the inner portion 8a of the upper rotor 8.

The steering angle sensor 2 is used as the detecting means for detecting information about the rotation of the steering wheel. The steering angle sensor 2 includes a rotary member 12 serving as a second rotor member, a fixing member 13 supporting the rotary member 12 to be rotatable, a circuit board 15 built in the fixing member 13, and a photo-interrupter 14 is mounted on the circuit board 15. The rotary member 12 is composed of a cylindrical hollow shaft portion 12a, a disk-shaped code plate 12b protruding outward from the vicinity of the center of the outer peripheral surface of the hollow shaft portion 12a, and the hollow shaft portion 12a and the code plate 12b are integrally formed by molding a synthetic resin. In addition, engaging protrusions 12c are formed at two places of an inner peripheral surface of the hollow shaft portion 12a at a 180-degree interval in a circumferential direction so as to be inserted in the engaging holes 9e of the elastic pieces 9d of the lower rotor 9. When the elastic piece 9d is fit with the engaging protrusion 12c such that the snap-in relationship is performed, as shown in Fig. 1, the tongue portion 9f of the elastic piece 9d is brought into an elastic contact with an inclined surface of the engaging protrusion 12c. In other words, the rotor member 2 is connected to the rotor housing 4 of the rotary connector 1 as the elastic piece 9d of the elastic piece 9d is fit with the engaging protrusion 12c formed at the inner peripheral surface of the rotary member 12. Further, since one of the two engaging protrusions 12c is set to have the same width dimension as the engaging hole 9e of the corresponding elastic piece 9d, the engaging protrusion 12c and the engaging piece 9d are combined to each other in the snap-in relationship, this prevents a backlash in the rotation direction. In addition, as to be described below, when the stator housing 3 and the fixing member 13 are fixedly connected to each other, a gap between the rotor housing 4 and the rotary member 12 slightly narrows; therefore, the elastic piece 9d bends and the tongue portion 9f is tightly pressure-contacted with the inclined surface of the engaging protrusion 12c.

The fixing member 13 of the steering angle sensor 2 is formed by integrally forming an upper cover 16 and a lower cover 17, and the upper cover 16 and the lower cover 17 are formed by molding a synthetic resin. The photo-interrupter 14 built in the fixing member 13 is an optical element (not shown) including a light emitting element and a light receiving element, and the light emitting element faces the light receiving element with a concave portion 14a interposed therebetween. A plurality of light-shielding portions 12d are formed on the code plate 12b of the rotary member 12 at predetermined intervals in the circumferential direction, and the light-shielding portion 12d intrudes into the concave portion 14a of the photo-interrupter 14 in accordance with the rotation of the rotary member 12. Accordingly, light traveling to the light receiving element from the light emitting element is blocked inside the concave portion 14a, and thus low and high signals are alternately output. Therefore, information about the rotation of the rotation member 12 can be detected on the basis of the output signals.

During assembling, the rotor housing 4 of the rotary connector 1 is connected with the rotary member 12 of the steering angle sensor 2 by the elastic piece 9d and the engaging protrusion 12c, and then the upper cover 16 is fixed to the bottom plate 7 by means of screw fixing and snap-in fitting. Therefore, the stator housing 3 of the rotary connector 1 is integrated with the fixing member 13 of the steering angle sensor 2. With this structure, when the stator housing 3 is fixedly connected to the fixing member 13, a gap between the rotor housing 4 and the rotary member 12 slightly narrows. Therefore, as shown in Fig. 5, the tongue portion 9f is tightly pressure-contacted with the inclined surface of the engaging protrusion 12c, while the elastic piece 9d is combined with the engaging protrusion 12c in the snap-in fitting. As a result, a component force and a reactive force of resilience generated due to bending of each elastic piece 9d urge the lower rotor 9 and hollow shaft portion 12a in an axis line direction and in a radial direction. In other words, the elastic piece 9d is set to have such a length that the elastic piece 9d bends when the stator housing 3 and the fixing member 13 are fixedly connected to each other, and the tongue portion 9f is pressure-contacted with the inclined surface of the engaging protrusion 12c. As a result, because an elastic force is applied in such a direction that the lower rotor 9 and the hollow shaft portion 12a separate from each other, the lower rotor 9 abuts on the bottom surface of the bottom plate 7 forming the stator housing 3 such that the lower plate portion 9c faces upward, and the rotary member 12 abuts the upper end at the inner radial side of the lower cover 17 facing downward. Therefore, a backlash rarely occurs in the axis line direction between the lower rotor 9 and the hollow shaft portion 12a that are connected to each other by the elastic piece 9d and the engaging protrusion 12c. In addition, due to elasticity of the elastic piece 9d that are being bent, the lower rotor 9 can slightly move in the radial direction with respect to the hollow shaft portion 12a; therefore, the lower rotor 9 and the hollow shaft portion 12a are connected to each other while the central axes are deviated from each other. In addition, dimensions are set such that a backlash rarely occurs in the rotation direction inside the engaging hole 9e of the elastic piece 9d corresponding one of the two engaging protrusions 12c; therefore, the rotation of the lower rotor 9 is reliably transferred to the hollow shaft portion 12a.

In this way, the connecting unit of the rotary connector 1 and the steering angle sensor 2 can be integrally built in the steering apparatus of the vehicle as long as they are vertically laid on each other. While assembling the connecting unit into the steering apparatus, preferably, the steering shaft is inserted through a central through hole of the rotary member 12 and a central through hole of the rotor housing 4, and then the stator housing 3 of the rotary connector 1 and the fixing member 13 of the steering angle sensor 2 are fixed to a base member, such as a steering column, and a connecting pin (not shown) erected from the upper rotor 8 of the rotary connector 1 is connected to the steering wheel.

When an operator turns the steering wheel clockwise or counter-clockwise while operating, the rotor housing 4 and the rotary member 12 integrally rotate along with the rotation of the steering wheel, so that the rotary connector 1 and the steering angle sensor 2 respectively operates. In other words, as for the rotary connector 1, as the rotor housing 4 rotates, the flexible cable 5 is wound or rewound; as for the steering angle sensor 2, as the rotary member 12 having the code plate 12b rotates, the photo-interrupter 14 outputs detection signals of the amount of rotation.

As described above, in the connecting structure of the rotary connector 1 and the steering angle sensor 2 according to the present embodiment, the rotor housing 4 and the rotary member 12 are connected to each other as the elastic piece 9d provided in the lower rotor 9 is combined with the engaging protrusion 12c provided in the hollow shaft portion 12a in the snap-in relationship. Further, since each elastic piece 9d bends during assembling, an elastic force is applied in such a direction that the rotor housing 4 and the rotary member 12 separate from each other. Therefore, a backlash is prevented in the line axis direction, the central axis of the rotor housing 4 is allowed to deviate from the central axis of the rotary member 12, and a backlash is prevented in the rotation direction, so that the rotation of the rotor housing 4 is reliably transferred to the rotary member 12. Moreover, stable detection signals can be obtained from the steering angle sensor 2, and the rotor housing 4 and the rotary member 12 can be smoothly rotated, respectively, as the rotary connector 1 which requires a relatively large clearance is connected to a highly accurate steering angle sensor 2.

In addition, according to the present embodiment, since it is unnecessary to provide a coil spring for preventing a backlash, vibration noise such as a spring noise, can be reduced. Therefore, improvements can be achieved in terms of noise reduction and assembling operability. In addition, since the rotary member 12 of the steering angle sensor 2 is formed of an integrated molding product in which the code plate 12b is protrudingly formed on the outer peripheral surface of the hollow shaft portion 12a, the number of parts and the man-hour for assembling can be reduced, and manufacturing cost can be significantly reduced.

According to the solving means of the invention, in the connecting structure of a rotary connector and a steering angle sensor, the first rotor member and the second rotor member are connected to each other by engaging the elastic piece provided in the first rotor member with the engaging portion provided in the second rotor member. Here, an elastic force is applied in such a direction that the first rotor member and the second rotor member separate from each other while the elastic piece is being bent, and the central axis of the first rotor member is allowed to deviate from the central axis of the second rotor member. Therefore, a backlash can be suppressed between both of the rotor members, and thus stable detection signals can be obtained from the steering angle sensor, and the rotary connector which requires a relatively large clearance is connected to a highly accurate steering angle sensor, and thus both of the rotor members can be smoothly rotated, respectively. In addition, since it is unnecessary to provide a coil spring for preventing a backlash, vibration noise, such as a spring noise, can be reduced.

## Claims

1. A connecting structure of a rotary connector and a steering angle sensor, comprising:
a rotary connector (1) in which a first rotor member (4) is rotatably supported by a stator member (3), the first rotor (4) member formed of a synthetic resin in a hollow shaft shape and rotating in accordance with a steering wheel; and
a steering angle sensor (2) in which a second rotor member (12) is rotatably supported by a fixing member (13), the second rotor member having a code plate (12b) provided at an outer peripheral surface of a hollow shaft portion (12a);
wherein a plurality of elastic pieces (9d) is provided in an. inner peripheral portion of the first rotor member (4), the plurality of elastic pieces (9d) extending downward along an inner peripheral surface of the hollow shaft portion of the second rotor member (12), engaging portions (12c) are formed at the inner peripheral surface of the hollow shaft portion (12a) surface so as to be engaged with the elastic pieces, and
as the stator member (3) and the fixing member (13) are fixedly connected to each other, the elastic pieces (9d) are fixedly engaged with the engaging portions (12c) in a state in which the elastic pieces (9b) are bent, thereby urging said hollow shaft portion (12a) away from said first rotor member (4).

2. The connecting structure of a rotary connector and a steering angle sensor according to claim 1,
wherein the plurality of elastic pieces (9d) are disposed at equal intervals in a circumferential direction of the inner peripheral surface of the hollow shaft portion (12a), and
at least one of the elastic pieces (9d) is positioned in a rotation direction of the second rotor member (12).

3. The connecting structure of a rotary connector and a steering angle sensor according to claim 1 or 2,
wherein a tongue portion (9f) is formed on the elastic piece (9d) so as to extend downward at an inclined angle from an upper portion of the engaging hole, and an engaging protrusion is formed at the inner peripheral surface of the hollow shaft portion (12a) so as to serve as the engaging portion (12c) to be inserted in the engaging hole, and
the tongue portion (9f) is brought into an elastic contact with the engaging protrusion by combining the engaging piece with the engaging protrusion in a snap-in relationship.

4. The connecting structure of a rotary connector and a steering angle sensor according to any of claims 1 to 3.
wherein the second rotor member (12) is formed of a synthetic resin molding product in which the code plate (12b) is integrally formed on the outer peripheral surface of the hollow shaft portion (12a).

## Patentansprüche

1. Verbindungskonstruktion eines Drehverbinders und eines Lenkwinkelsensors, aufweisend:
einen Drehverbinder (1), bei dem ein erstes Rotorelement (4) durch ein Statorelement (3) drehbar abgestützt ist, wobei das erste Rotorelement (4) aus Kunstharzmaterial mit einer Hohlwellenform gebildet ist und sich nach Maßgabe eines Lenkrads dreht; und
einen Lenkwinkelsensor (2), bei dem ein zweites Rotorelement (12) durch ein Festlegeelement (13) drehbar abgestützt ist, wobei das zweite Rotorelement
eine Codeplatte (12b) aufweist, die an einer Außenumfangsfläche eines Hohlwellenbereichs (12a) vorgesehen ist;
wobei eine Mehrzahl von elastischen Stücken (9d) in einem Innenumfangsbereich des ersten Rotorelements (4) vorgesehen ist, wobei sich die mehreren elastischen Stücke (9d) entlang einer Innenumfangsfläche des Hohlwellenbereichs des zweiten Rotorelements (12) nach unten erstrecken und Eingriffsbereiche (12c) an der Innenumfangsfläche des Hohlwellenbereichs (12a) derart ausgebildet sind, dass sie mit den elastischen Stücken in Eingriff treten, und
wobei bei fester Verbindung des Statorelements (3) und des Festlegeelements (13) miteinander die elastischen Stücke (9d) in einem Zustand, in dem die elastischen Stücke (9d) gebogen werden, mit den Eingriffsbereichen (12c) in festem Eingriff stehen, so dass der Hohlwellenbereich (12a) in Richtung von dem ersten Rotorelement (4) weg gedrückt wird.

2. Verbindungskonstruktion eines Drehverbinders und eines Lenkwinkelsensors nach Anspruch 1,
wobei die mehreren elastischen Stücke (9d) in gleichmäßigen Intervallen in Umfangsrichtung der Innenumfangsfläche des Hohlwellenbereichs (12a) angeordnet sind, und
wobei mindestens eines der elastischen Stücke (9d) in einer Rotationsrichtung des zweiten Rotorelements (12) angeordnet ist.

3. Verbindungskonstruktion eines Drehverbinders und eines Lenkwinkelsensors nach Anspruch 1 oder 2,
wobei ein Zungenbereich (9f) an dem elastischen Stück (9d) derart ausgebildet ist, dass er sich in einem geneigten Winkel von einem oberen Bereich der Eingriffsöffnung in Richtung nach unten erstreckt, und ein Eingriffsvorsprung an der Innenumfangsfläche des Hohlwellenbereichs (12a) ausgebildet ist und als Eingriffsbereich (12c) zum Einsetzen in die Eingriffsöffnung dient, und
wobei der Zungenbereich (9f) mit dem Eingriffsvorsprung in elastischen Kontakt gebracht wird, indem das Eingriffsstück in einer Schnappverbindung mit dem Eingriffsvorsprung kombiniert wird.

4. Verbindungskonstruktion eines Drehverbinders und eines Lenkwinkelsensors nach einem der Ansprüche 1 bis 3,
wobei das zweite Rotorelement (12) auf einem Kunstharz-Formprodukt gebildet ist, bei dem die Codeplatte (12b) in integraler Weise auf der Außenumfangsfläche des Hohlwellenbereichs (12a) ausgebildet ist.

## Revendications

1. Structure de connection d'un connecteur rotatif et d'un capteur d'angle de braquage, comprenant :
un connecteur rotatif (1) dans lequel un premier élément de rotor (4) est supporté à rotation par un élément de stator (3), le premier élément de rotor (4) se présentant sous la forme d'un axe creux en résine synthétiqueet tournant selon un volant de direction ; et
un capteur d'angle de braquage (2) dans lequel un deuxième élément de rotor (12) est supporté à rotation par un élément de fixation (13), le deuxième élément de rotor comportant une roue codeuse (12b) placée au niveau d'une surface périphérique extérieure d'une partie d'axe creux (12a) ;
dans laquelle une pluralité de pièces élastiques (9d) sont placées dans une partie périphérique intérieure du premier élément de rotor (4), la pluralité de pièces élastiques (9d) s'étendant vers le bas le long d'une surface périphérique intérieure de la partie d'axe creux du deuxième élément de rotor (12), des parties d'accrochage (12c) sont formées sur la surface périphérique intérieure de la surface de la partie d'axe creux (12a) pour s'engager avec les pièces élastiques, et
lorsque l'élément de stator (3) et l'élément de fixation (13) sont assemblés de manière fixe l'un à l'autre, les pièces élastiques (9d) sont engagées de manière fixe avec les parties d'accrochage (12c) dans un état dans lequel les pièces élastiques (9d) sont courbées, ce qui éloigne ladite partie d'axe creux (12a) dudit premier élément de rotor (4).

2. Structure de connection d'un connecteur rotatif et d'un capteur d'angle de braquage selon la revendication 1,
dans laquelle les pièces élastiques (9d) sont disposées à intervalles réguliers dans le sens de la circonférence de la surface périphérique intérieure de la partie d'axe creux (12a), et
au moins l'une des pièces élastiques (9d) est positionnée dans une direction de rotation du deuxième élément de rotor (12).

3. Structure de connection d'un connecteur rotatif et d'un capteur d'angle de braquage selon la revendication 1 ou 2,
dans laquelle une partie languette (9f) est formée sur la pièce élastique (9d) de manière à s'incliner vers le bas selon un angle d'inclinaison depuis une partie supérieure du trou d'accrochage, et une protubérance d'accrochage est formée sur la surface périphérique intérieure de la partie d'axe creux (12a) afin de servir de partie d'accrochage (12c) à insérer dans le trou d'accrochage, et
la partie languette (9f) est mise en contact élastique avec la protubérance d'accrochage en combinant la pièce d'accrochage avec la protubérance d'accrochage en une relation d'emboîtement par pression.

4. Structure de connection d'un connecteur rotatif et d'un capteur d'angle de braquage selon l'une quelconque des revendications 1 à 3, dans laquelle le deuxième élément de rotor (12) est un produit moulé en résine synthétique dans lequel la roue codeuse (12b) est formée d'un seul tenant sur la surface périphérique extérieure de la partie d'axe creux (12a).
